(19) Europäisches Patentamt
European Patent Office
Office européen des brevets

(11) **EP 3 385 734 A1**

(12) **EUROPEAN PATENT APPLICATION**

(43) Date of publication:
**10.10.2018 Bulletin 2018/41**

(51) Int Cl.:
***G01R 31/28*** (2006.01)   ***G01R 31/317*** (2006.01)
***G06F 17/50*** (2006.01)

(21) Application number: **18164758.7**

(22) Date of filing: **28.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017 FR 1752811**

(71) Applicant: **Commissariat à l'Energie Atomique et aux Energies Alternatives
75015 Paris (FR)**

(72) Inventors:
• **ALTIERI SCARPATO, Mauricio
38000 GRENOBLE (FR)**
• **BEIGNE, Edith
38112 MEAUDRE (FR)**
• **HERON, Olivier
78830 BULLION (FR)**
• **LESECQ, Suzanne
38190 FROGES (FR)**

(74) Representative: **Cabinet Beaumont
4, Place Robert Schuman
B.P. 1529
38025 Grenoble Cedex 1 (FR)**

(54) **METHOD AND DEVICE FOR ESTIMATING CIRCUIT AGING**

(57) The invention concerns a method of determining the effect of aging on a propagation delay in a circuit path of a digital circuit, the method comprising determining, by a processing device (104) of the digital circuit based on a parameter aging model ($\Delta p_{Vth}$) representing a variation of a first parameter (p) as a function of at least the age of the digital circuit, a variation of the first parameter due to aging at a time t after fabrication of the digital circuit, wherein the first parameter (p) is a parameter of a delay model (DELAY MODEL) representing the propagation delay in the circuit path.

Fig 1

**Description**

<u>FIELD</u>

The present disclosure relates to the field of integrated circuits, and in particular to a method and device for estimating circuit aging.

**BACKGROUND**

Circuit aging is principally due to two effects known as Bias Temperature Instability (BTI) and Hot Carrier Injection (HCI). Each of these phenomena causes an increase in the threshold voltage $V_{TH}$ of the transistors of the circuit. In digital circuits, this leads to an increase in the propagation delay through the circuit. Unless the supply voltage and/or clock frequency are adapted during the lifetime of the circuit, such increases in the propagation delay can lead to the occurrence of timing faults.

For certain applications, such as for circuits used in spatial applications or on the railways, it is desired that the circuit is capable of operating correctly over many years, for example for up to 20 years. However, aging effects over such periods become significant and it becomes difficult to anticipate in advance the likely impact on propagation delays. Indeed, a difficulty is that the aging of the path delays is dependent on various factors, such as the supply voltage, temperature, the circuit work load, and the circuit topology. Thus, it is not possible to calculate in advance the effect of aging over the lifetime of a circuit, and performing an online evaluation based on all of the variables is overly complex. There is thus a need for a simple and efficient method and device for determining the impact of aging on a digital circuit.

**SUMMARY**

It is an aim of embodiments of the present description to at least partially address one or more difficulties in the prior art.

According to one aspect, there is provided a method of determining the effect of aging on a propagation delay in a circuit path of a digital circuit, the method comprising: taking one or more measurements of at least one operating parameter of the digital circuit; determining, by a processing device of the digital circuit, based on the one or more operating parameter measurements and based on a parameter aging model stored in a memory of the digital circuit representing a variation of a first parameter as a function of the age of the digital circuit and as a function of the at least one operating parameter, a variation of the first parameter due to aging at a time t after fabrication of the digital circuit, wherein the first parameter is a parameter of a delay model representing the propagation delay in the circuit path; and based on the determined variation of the first parameter, performing an action on the digital circuit.

According to one embodiment, the at least one operating parameter is one or more of: a supply voltage of the digital circuit; a transistor body bias voltage of the digital circuit; and a temperature of the digital circuit; and the parameter aging model represents a variation of the first parameter as a function of the supply voltage, body bias voltage and/or temperature of the digital circuit.

According to one embodiment, the method further comprises controlling, by the processing device based on the determined variation of the first parameter, one or more of: a supply voltage of all or part of the digital circuit; a clock frequency of all or part of the digital circuit; a transistor body voltage of all or part of the digital circuit; and a task assignment among a plurality of sub-circuits of said digital circuit.

According to one embodiment, the parameter aging model is based on the following equation:

$$\Delta p_{Vth}(V,T,t) = V^{\gamma} * e^{\frac{-E_a}{kT}} * (c_1 * t^{n_1} + c_2 * t^{n_2})$$

where V is the supply voltage of the digital circuit, T is the temperature of the digital circuit, $\gamma$ is the voltage acceleration factor, $E_a$ is the temperature activation energy, k is Boltzmann's constant, and $c_1$, $c_2$, $n_1$ and $n_2$ are coefficients.

According to one embodiment, the method further comprises calculating the propagation delay in the circuit path using the delay model based on the determined variation of the first parameter.

According to one embodiment, the delay model is based on the following equation:

$$Delay(V,T,t) = p_{\beta} + p_{\mu^{-1}}(T)\frac{V}{\left(V - \left(p_{Vth}(T) + \Delta p_{Vth}(V,T,t)\right)\right)^{p_{\alpha}}}$$

where:

$$p_{\mu^{-1}}(T) = C_{\mu^{-1}} + k_{\mu^{-1}}T^{n_{\mu^{-1}}}, and\ p_{Vth}(T) = C_{Vth} - k_{Vth}T^{n_{Vth}}$$

and where $C_{\mu}$-1, $k_{\mu}$-1, $n_{\mu}$-1, $C_{Vth}$, $k_{Vth}$, $n_{Vth}$, $p_{\alpha}$ and $p_{\beta}$ are coefficients of the delay model, $p_{Vth}(T) + \Delta p_{Vth}(V,T,t)$ is the first parameter, and $\Delta p_{Vth}(V,T,t)$ is the variation of the first parameter as a function of the age of the digital circuit.

According to one embodiment, the method further comprises determining, by the processing device, that the supply voltage was at a first voltage $V_1$ for a period $t_1$ and at a second voltage $V_2$ for a period $t_2$, wherein determining the variation of the first parameter due to aging at the time t after fabrication of the digital circuit comprises determining, by the processing device based on the parameter aging model, a first variation of the first parameter based on the period $t_1$ and the supply voltage ; determining, by the processing device based on the parameter aging model, an equivalent period $t^+$ after which the variation of the first parameter would have been equal to the first variation had the supply voltage been at $V_2$ for the period $t_1$; and determining, by the processing device based on the parameter aging model, a second variation of the first parameter for the periods $t_1$ and $t_2$ assuming a time period equal to $t^++t_2$ and the supply voltage $V_2$.

According to one embodiment, the method further comprises determining a mean time to failure (MTTF) of the digital circuit based on the determined variation of the first parameter.

According to one embodiment, the method further comprises determining a clock frequency, supply voltage and/or body bias voltage to be applied to the digital circuit based on the determined variation of the first parameter.

According to one embodiment, the digital circuit comprises a plurality of sub-circuits, the circuit path being part of a first of the sub-circuits, the method further comprising determining, by the processing device based on a further parameter aging model representing a variation of a further parameter as a function of at least the age of the digital circuit, a further variation of the further parameter due to aging at a time t after fabrication of the digital circuit, wherein the further parameter is a parameter of a further delay model representing the propagation delay in the further circuit path; and comparing the determined further variation with the determined variation and controlling task distribution among the plurality of sub-circuits as a function of the comparison.

According to one embodiment, the method further comprises, prior to determining the variation of the first parameter, selecting the parameter aging model from a plurality of parameter aging models, the selection being based on a determined workload of the digital circuit.

According to a further aspect, there is provided a method of determining, by a further processing device, the above parameter aging model, the method comprising: determining propagation delays of the circuit path using a circuit simulation based on a range of supply voltages V and a range of temperatures T of the digital circuit; determining one or more parameters of the delay model based on the determined propagation delays using a fitting algorithm; determining propagation delays of the circuit path using a further age-aware simulation based on the range of supply voltages V, the range of temperatures T, and on a range of ages t of the digital circuit; determining variations of the one or more parameters of the delay model for each supply voltage V and temperature T as a function of the age t; and determining one or more coefficients of the parameter aging model based on said determined variations.

According to a further aspect, there is provided a circuit comprising: a digital circuit; a memory storing a parameter aging model; and a processing device configured to determine the effect of aging on a propagation delay in a circuit path of the digital circuit by: taking one or more measurements of at least one operating parameter of the digital circuit; determining, based on the one or more operating parameter measurements and based on the parameter aging model representing a variation of a first parameter as a function of the age of the digital circuit and as a function of the at least one operating parameter, a variation of the first parameter due to aging at a time t after fabrication of the digital circuit, the first parameter being a parameter of a delay model representing the propagation delay in the circuit path, the processing device being further configured to performing an action on the digital circuit based on the determined variation of the first parameter.

According to one embodiment, the circuit further comprises a memory storing the parameter aging model and the delay model.

According to one embodiment, the parameter aging model represents a variation of the first parameter further as a function of the supply voltage and temperature of the digital circuit, the circuit further comprising a supply voltage and temperature monitoring circuit adapted to monitor a supply voltage and temperature of the digital circuit.

According to one embodiment, the circuit further comprises a workload determination circuit indicating a current workload of the digital circuit.

**BRIEF DESCRIPTION OF THE DRAWINGS**

The foregoing and other features and advantages will become apparent from the following detailed description of embodiments, given by way of illustration and not limitation with reference to the accompanying drawings, in which:

Figure 1 schematically illustrates an integrated circuit according to an example embodiment of the present disclosure;

Figure 2 represents operation of a processing device of the circuit of Figure 1 according to an example embodiment;

Figure 3 schematically illustrates a computing device according to an example embodiment of the present disclosure;

Figure 4 is a flow diagram showing operations in a method of determining a model representing a change in a parameter of a delay model over time according to an example embodiment of the present disclosure;

Figure 5 is a graph illustrating a propagation delay surface according to an example embodiment of the present disclosure;

Figures 6A and 6B are graphs representing variations of parameters as a function of temperature at two different times according to an example embodiment of the present disclosure;

Figure 7 is a graph illustrating estimation of a parameter variation according to an example embodiment of the present disclosure;

Figure 8 is a graph illustrating an example of temperature and voltage ranges falling within a safe zone according to an example embodiment of the present disclosure; and

Figure 9 is a flow diagram illustrating operations in a method of adapting a clock frequency, supply voltage or body voltage of a digital circuit according to an example embodiment of the present disclosure.

## DETAILED DESCRIPTION

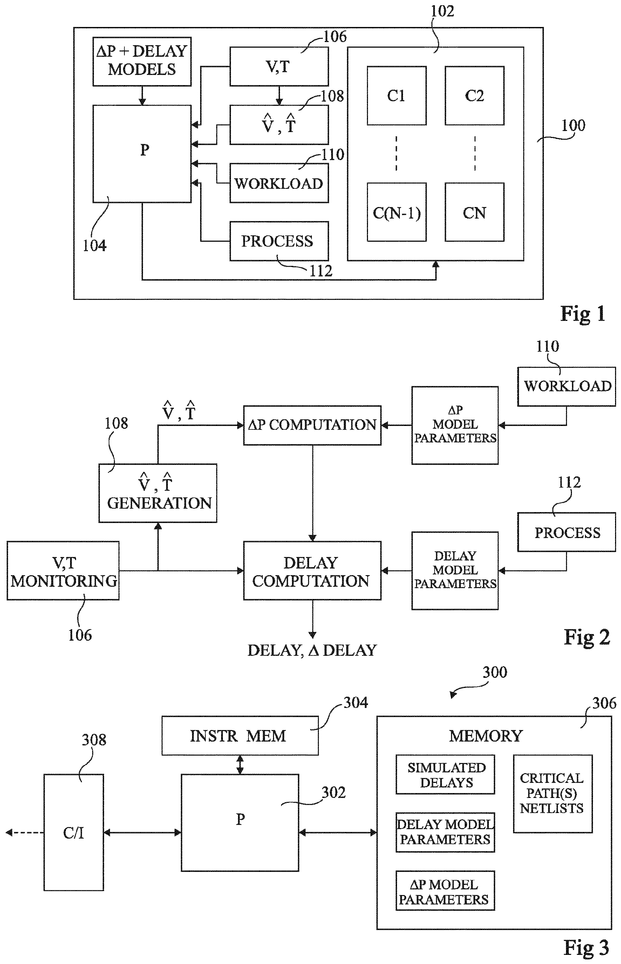

Figure 1 schematically illustrates an integrated circuit 100 according to an example embodiment of the present disclosure.

The circuit 100 for example comprises a digital circuit 102 comprising, in this example, N processing cores C1 to CN, where N is for example an integer equal to at least 2. In alternative embodiments, the digital circuit could comprise other types of circuit.

The circuit 100 further comprises a processing device (P) 104 adapted to determine the effect of aging on the propagation delay of one or more circuit paths of the digital circuit 102. The processing device 104 is for example coupled to one or more memories storing $\Delta p$ and delay models ($\Delta p$ + DELAY MODELS) 106. For example, the memories are non-volatile memories such that these models are stored within the integrated circuit 100 throughout its lifetime. As will be described in more detail below, at least one delay model for example indicates, for a given process corner, the propagation delay of one or more critical paths in the digital circuit for example based on a voltage and temperature. At least one parameter p of the delay model varies as a function of age, and the one or more $\Delta p$ models indicate, based on voltage and temperature values, and on a given workload, the variation $\Delta p$ of the at least one parameter p for a given age of the digital circuit.

The processing device 104 is also for example coupled to a voltage and temperature monitoring circuit 106 adapted to monitor current voltage and temperature values of the digital circuit 102, to a circuit 108 providing average values $\hat{V}, \hat{T}$ over time of the supply voltage V and temperature T of the digital circuit 102, to a circuit (WORKLOAD) 110 indicating a current workload of the digital circuit 102 and to a process evaluation circuit (PROCESS) 112 adapted to detect process parameters of the digital circuit 102.

In one embodiment, the processing device 104 comprises one or more processors adapted to execute software instructions stored in an instruction memory (not illustrated). In some embodiments, the processing device 104 is implemented by one of the processing cores C1 to CN of Figure 1. Additionally or alternatively, the processing device 104 may at least partially be implemented in hardware.

Operation of the processing device 104 will now be described in more detail with reference to Figure 2.

Figure 2 represents an example of the operations performed by the processing device 104 and circuits 106 to 112 of Figure 1. The circuit 106 for example monitors operating parameters of the digital circuit 102, such as one or more supply voltage levels V and one or more temperature levels T of the digital circuit 102, and provides the measured levels to the circuit 108 in order to generate the average values $\hat{V}, \hat{T}$. For example, from the time that the digital circuit 102 is first activated, the voltage supplied to one or more of its circuit paths, and the temperature in the vicinity of the one or more circuit paths, are monitored. Each time there is a change in the voltage and/or temperature, or at regular intervals, the average values $\hat{V}, \hat{T}$ are updated to reflect the average levels since the first activation.

The measured operating parameters, such as the average values $\hat{V}, \hat{T}$, are then used to compute a change $\Delta p$ in a parameter p ($\Delta p$ COMPUTATION), based on the $\Delta p$ model. In some embodiments, one or more parameters of the $\Delta p$ model ($\Delta p$ MODEL PARAMETERS) are selected based on a current workload of the digital circuit provided by the circuit 110.

The computed change $\Delta p$ in the parameter p is itself an indicator of the extent of aging of the digital circuit, as it will indicate the degradation of the propagation delay due to aging. In some embodiments, the new propagation delay is then calculated (DELAY COMPUTATION), based on the new value of the parameter p and on the delay model. In some embodiments, there is a plurality of delay models, each having one or more parameters (DELAY MODEL PARAMETERS) adapted to a given process corner, and a selection is made among these delay models based on the process parameters of the digital circuit 102 detected by the circuit 112. For example, the circuit 112 comprises a process-control monitor structure as described in more detail in the publication by B.P. Das et al. entitled "Within-Die Gate Delay Variability Measurement Using Reconfigurable Ring Oscillator", IEEE Transactions on Semiconductor Manufacturing, vol. 22, no. 2, pp. 256-267, May 2009.

Furthermore, in some embodiments, the difference between the original propagation delay of the digital circuit 102 and the new propagation delay is calculated in order to determine the change ΔDELAY in the delay due to aging.

Based on the computed change Δp in the parameter p, one or more actions are for example performed on the digital circuit, such as controlling, by the processing device 104 based on the determined variation of the first parameter, one or more of: a supply voltage of all or part of the digital circuit; a clock frequency of all or part of the digital circuit; a transistor body voltage of all or part of the digital circuit; and a task assignment among a plurality of sub-circuits of said digital circuit.

Figure 3 illustrates a computing device 300 for computing delay model parameters and the Δp model for critical paths of the digital circuit 102 of Figure 1 according to an example embodiment.

The computing device 300 for example comprises a processing device 302 comprising one or more processors under control of software instructions stored in an instruction memory (INSTR MEM) 304. The same or a separate memory 306 for example stores netlists (CRITICAL PATH(S) NETLISTS) of one or more critical paths of the digital circuit, simulated propagation delays (SIMULATED DELAYS) of the critical paths, calculated delay model parameters (DELAY MODEL PARAMETERS) and calculated Δp model parameters.

The computing device 300 for example further comprises a communications interface (C/I) 308 via which one or more sets of delay model parameters and Δp model parameters can be transmitted for storage on a non-volatile memory of the integrated circuit 102 of Figure 1.

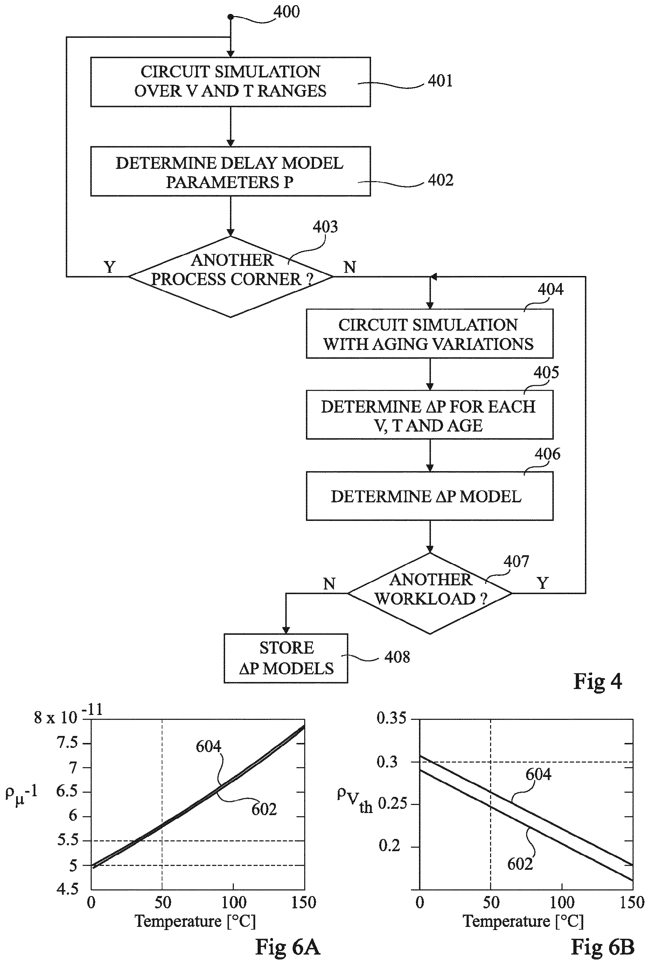

Operation of the computing device 300 of Figure 3 will now be described in more detail with reference to the flow diagram of Figure 4.

Figure 4 is a flow diagram illustrating operations in a method of determining one or more sets of parameters of a delay model and a Δp model corresponding to one or more circuit paths of a digital circuit.

The method starts at a point 400. It is assumed that netlists of one or more critical paths of a circuit design of the digital circuit have been extracted. For example, static timing analysis is performed on the circuit design in order to determine which paths are likely to be the most timing critical for various workloads. In some embodiments, a selection of the paths is made based on those which are aging-aware representative paths, as described in the publication by C. Sandionigi and O. Heron entitled "Identifying aging-aware representative paths in processors", 2015, IEEE 21st International On-line Testing Symposium (IOLTS), Halkidiki, 2015, pp.32-33. Furthermore, in some embodiments one or more circuit paths are selected from each of a plurality of sub-circuits of the digital circuit. For example, with reference to Figure 1, one or more circuit paths in each of the processing cores C1 to CN could be selected. Assuming that each of these sub-circuits is identical, the same circuit path in each sub-circuit is for example selected. In this way, the aging of the sub-circuits with respect to each other can be compared, as will be described in more detail below.

In an operation 401, a circuit simulation of one or more critical paths is performed, using an electronic circuit simulator, over a range of voltages V and a range of temperatures T. For example, the circuit simulation is a SPICE (Simulation Program with Integrated Circuit Emphasis) simulation, as known by those skilled in the art. In particular, the circuit simulation provides, for each V, T combination, and for each critical path, a corresponding propagation delay. The circuit simulation is for example based on a first assumption regarding the process corner of the transistors forming the critical path. Indeed, as known by those skilled in the art, certain parameters (dimensions, doping levels, etc.) of transistors resulting from the manufacturing process should respect certain acceptable ranges, and the circuit performance will depend on the final values of these parameters in the fabricated circuit. A process corner for example corresponds to extreme values in these acceptable ranges.

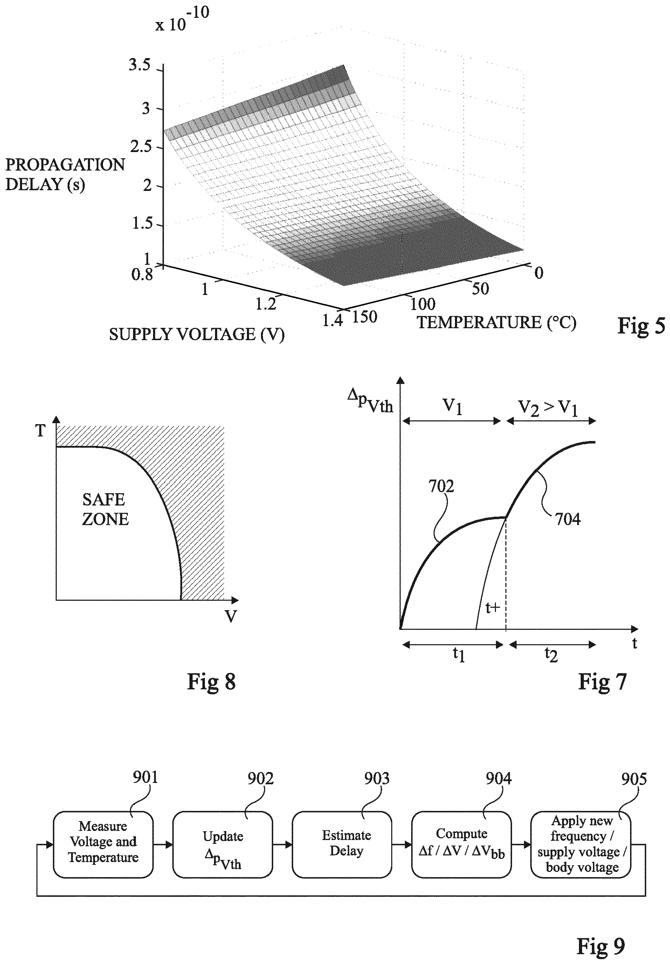

In an operation 402, one or more delay model parameters p of a delay model are identified by fitting the propagation delays to a delay model that depends on the variables V and T. In the case that the digital circuit is based on FDSOI (Fully Depleted Silicon On Insulator) technology in which the transistor devices have back gates, the body bias voltage Vbb applied to the back gate is for example added to the model as a further variable. This operation will now be described in more detail with reference to Figure 5.

Figure 5 is an example of a propagation delay surface representing the propagation delay as a function of the supply voltage and the temperature. In one embodiment, a fitting operation is performed by cutting the delay surface by temperature in order to generate, for each temperature level, a curve Delay(V). Each of these curves is then for example fitted to the following delay formula:

$$Delay(V) = p_0 + p_1 \frac{V}{(V-p_2)^{p_3}} \qquad \sim 1$$

where the parameter $p_0$ is constant, and the parameters $p_1, p_2$ and $p_3$ correspond to: $C_{tot}/\mu(T)$, $Vth(T)$, and $\alpha$ respectively, and where $C_{tot}$ is the sum of all output load capacitances in the circuit path, $\mu(T)$ is the carrier mobility, $Vth(T)$ is the threshold voltage and $\alpha$ is a positive constant. This fitting operation is for example performed using a non-linear least squares method, for example the *nlinfit* command in MATLAB (the name "MATLAB" may correspond to a registered trademark). The present inventors have found that the parameters $p_1$ and $p_2$ vary in a relatively linear fashion, and can thus each be represented in the form $y(x) = C \pm kx^n$. Applying this relation in the above Delay equation, the following model of the delay of a circuit path as a function of the variables V and T is obtained:

$$Delay(V,T) = p_0 + (p_1 + p_2 T^{P_3}) \frac{V}{(V-(p_4-p_5 T^{P_6}))^{p_7}} \qquad \sim 2$$

where $p_0$ to $p_7$ are eight coefficients to be determined by the fitting operation 402. The present inventors have found this delay model to accurately reflect the delays in typical circuit paths.

The whole delay surface for each critical path is then for example fitted to this formula, in order to generate a value of each coefficient $p_0$ to $p_7$. One particular example of the coefficients obtained for a critical path of a certain digital circuit is provided in the following table, indicating for each coefficient its standard deviation as a percentage:

| $p_0$ | $p_1$ | $p_2$ | $p_3$ | $p_4$ | $p_5$ | $p_6$ | $p_7$ |
|---|---|---|---|---|---|---|---|
| 6.88e-11 | 2.77e-11 | 2.67e-16 | 2.02 | 0.44 | 8.69e-5 | 1.35 | 2.64 |
| 0.07 | 0.25 | 1.25 | 0.1 | 0.13 | 1.25 | 0.15 | 0.03 |

The maximum residual error in the choice of these coefficients was found to be only 0.53%, and the mean error was only 0.082%, validating the choice of the above delay model.

Referring again to Figure 4, in an operation 403, it is then determined whether there are other process corners to be considered. If so, the method returns to operation 401, and operations 401 to 403 are repeated assuming another combination of manufacturing process parameters.

In some embodiments, each of the above coefficients $p_0$ to $p_7$ is evaluated for each process corner. In alternative embodiments, one or more of the coefficients that do not greatly vary could be fixed. For example, the present inventors found that the coefficients $p_3$ to $p_7$ can be fixed, and the values of $p_0$ to $p_2$ determined for each process corner, for example corners corresponding to slow-slow (SS), typical-typical (TT) and fast-fast (FF).

Once all process corners have been considered at operation 403, the next operation is an operation 404.

In operation 404, a circuit simulation of each critical path, and over the range of V and T values, is repeated while taking into account aging-induced variations for a range of circuit ages, for example over an age range t of 0 to 20 years. In one embodiment, stress stimuli are generated for voltages in the range [0 8]V, temperatures in the range [0 150] °C, and ages in the range [0 20] years. For example, assuming 30 values in each range, the number of (V, T, t) combinations is for example 27000, and a corresponding path delay is generated for each combination. The simulation is for example based on a first assumption of the workload of each critical path. For a given workload, the signal probabilities of each transistor are for example obtained using cycle accurate RTL (Register Transfer Level) simulations.

For example, age-induced variations are simulated based on aging physical models provided by the foundry or otherwise determined. In some cases, aging-induced variations are provided by the simulation software. For example, such aging-induced variations are based on the Bias Temperature Instability (BTI) and Hot Carrier Injection (HCI) phenomena.

As an example, the aging simulations are performed using the technique described in the publication by M. Selim, E. Jeandeau and C. Descleves entitled "Design-Reliability Flow and Advanced Models Address IS-Reliability Issues", Workshop on Early Reliability Modeling for Aging and Variability in Silicon Systems @ DATE'16, March 2016, Dresden, Germany. This involved computing the stress experienced by each transistor of the circuit path during a transient simulation and then performing a new simulation while taking into account the resulting degradation. The degradation is for example estimated using physical models for the BTI and HCI effects, and a comparison is made between the fresh and aged simulations in order to determine the induced delay.

In an operation 405, the variation $\Delta p$, as a function of age t, of one or more of the parameters p of the delay model is determined for each of the simulated (V, T, t) combinations of operation 404. The variation $\Delta p$ is for example evaluated by fitting the propagation delays at the various ages t with the delay model to generate a new value of the parameter p, and determining the difference between this new value of the parameter p and the original value determined in operation 402 for the corresponding V and T values.

In some embodiments, a single variable parameter of the delay model is assumed in operation 405, as this considerably simplifies the fitting process described later. For example, the following delay model is assumed:

$$Delay(V,T,t) = p_\beta + p_{\mu^{-1}}(T)\frac{V}{\left(V-(p_{Vth}(T)+\Delta p_{Vth}(V,T,t))\right)^{p_\alpha}} \qquad \sim 3$$

where only the parameter $\Delta p_{Vth}(V,T,t)$ is assumed to be variable with the age t. Thus the variation in this parameter $\Delta p_{Vth}(V,T,t)$ is for example determined for each (V, T, t) combination.

Equation 3 above was for example determined by the present inventors as follows. As the propagation delay of a circuit path increases over time, it follows that at least one parameter of the delay model evolves with aging. We start with a delay model represented using the following notation:

$$Delay(V,T) = p_\beta + p_{\mu^{-1}}(T)\frac{V}{(V-p_{Vth}(T))^{p_\alpha}} \qquad \sim 4$$

where:

$$p_{\mu^{-1}}(T) = C_{\mu^{-1}} + k_{\mu^{-1}}T^{n_{\mu^{-1}}}, and \; p_{Vth}(T) = C_{Vth} - k_{Vth}T^{n_{Vth}}$$

and where $C_{\mu}$-1, $k_{\mu}$-1 and $n_{\mu}$-1 are coefficients to be determined relating to the carrier mobility degradation, and $C_{Vth}$, $k_{Vth}$ and $n_{Vth}$ are coefficients to be determined relating to the threshold voltage degradation, and $p_\alpha$ and $p_\beta$ are the coefficients $p_0$ and $p_7$ of equation 2 above.

Circuit simulations were performed with aging variations corresponding to a relatively high age, for example 20 years. This provided a surface, which was for example fitted to the delay model where the coefficients $p_\alpha$ and $p_\beta$ were fixed to their original values.

Figures 6A and 6B are graphs representing the variation in the parameters $p_\mu$-1 and $p_{Vth}$ as a function of temperature in the case of a fresh circuit (curves 602 in the figures) and at the relatively high age (curves 604 in the figures). It can be seen that the coefficient $p_\mu$-1 varies little with age, and can thus be excluded from age dependency. Furthermore, the coefficient $p_{Vth}$ can be assumed to have a component $p_{Vth}(T)$ that varies only with temperature, and a further component $\Delta p_{Vth}(V,T,t)$ that varies as a function of voltage, temperature and age. The model thus become that of equation 3 above.

The operation 405 for example involves determining the value of $\Delta p_{Vth}$ for each (V, T, t) condition expressed as:

$$\Delta p_{Vth}\big|Delay(V,T,\Delta p_{Vth}) = Delay_{Aged} \qquad \sim 5$$

where $Delay_{Aged}$ is the propagation delay determined in operation 404 after aging.

In an operation 406, the $\Delta p$ model is for example determined based on the variations $\Delta p$ generated in operation 405.

For example, the present inventors have found a model for $\Delta p_{Vth}(V,T,t)$ having the following form to provide very satisfactory fitting results:

$$\Delta p_{Vth}(V,T,t) = V^\gamma * e^{\frac{-E_a}{kT}} * (c_1 * t^{n_1} + c_2 * t^{n_2}) \qquad \sim 6$$

where $\gamma$ is a voltage acceleration factor, $E_a$ is a temperature activation energy, k is Boltzmann's constant, and $c_1$, $c_2$, $n_1$ and $n_2$ are the coefficients of the model to be determined. The presence of two time components $t^{n_1}$ and $t^{n_2}$ is explained by the fact that the BTI and HCI effects have different time dynamics.

The following table provides one example of the coefficients obtained for the $\Delta p_{Vth}(V,T,t)$ model, indicating for each coefficient its standard deviation as a percentage:

| $\gamma$ | $E_a/k$ | $C_1$ | $n_1$ | $C_2$ | $n_2$ |
|------|-------|-------|------|-------|------|
| 5.04 | 911.7 | 3.5e-3 | 0.07 | 3.7e-4 | 0.25 |

(continued)

| $\gamma$ | $E_a/k$ | $C_1$ | $n_1$ | $C_2$ | $n_2$ |
|---|---|---|---|---|---|
| 0.11 | 0.17 | 0.81 | 3.8 | 6.26 | 0.97 |

With reference again to Figure 4, in an operation 407, it is for example determined whether or not there are other workloads to be considered. For example, the signal probabilities for each transistor may vary depending on the particular activity of the digital circuit. A workload is for example defined by <task, input data>, where "task" is a task assigned to the digital circuit, and "input data" is the input data set of the digital circuit. In some embodiments, the task may be defined simply based on the software application being executed by the digital circuit, if for example there is little different in the workload for each of the tasks defined by the software application. Furthermore, in some cases, for a given software application or task, the transistor signal probabilities may remain relatively constant irrespective of the input data set. Therefore, depending on the desired accuracy, the workload could be defined based only on the task and/or software application assigned to the digital circuit, without taking into account the input data set.

If there are more workloads to be considered, the operations 404 to 406 are for example repeated for another workload and the corresponding signal probabilities. In some embodiments, it may be found that some or all of the coefficients of the $\Delta p_{Vth}(V,T,t)$ model are similar for different workloads, and in such a case these coefficients could be shared between the workloads.

Once all workloads have been considered, the $\Delta p$ models, and the coefficients $\gamma$, $E_a/k$, $c_1$, $c_2$, $n_1$ and $n_2$ for each workload, are for example stored to the memory 306, and also to one or more integrated circuits containing the corresponding digital circuit. For example, the $\Delta p$ models are stored in a non-volatile memory of the integrated circuit such that throughout the lifetime of the integrated circuit the variations in the parameter p can be determined based on the given workload and the V, T measurements. As explained above with reference to Figures 1 and 2, in some embodiments the delay model for each process corner is for example also stored to a non-volatile memory of the integrated circuit.

Figure 7 is a graph illustrating estimation of a parameter variation according to an example embodiment. In particular, when determining the parameter variation $\Delta p_{Vth}$, historical voltages and workloads should be taken into account. In order to do this in an efficient manner, a technique is for example employed that is similar to the one described in the publication by V. B. Kleeberger et al. entitled "A compact model for NBTI degradation and recovery under use-profile variations and its application to aging analysis of digital integrated circuits", Microelectronics Reliability, Volume 54, Issues 6-7, June-July 2014, Pages 1083-1089.

Figure 7 represent the example of a voltage increase. When the voltage changes from a voltage to a voltage $V_2$ as shown in Figure 7 the parameter change $\Delta p_{Vth}(V_1,t_1)$, corresponding to the curve 702 of Figure 7, is calculated, where $t_1$ is the time spent at $V_1$. Next, the inverse function is applied to compute $t^+$, which is the time required to reach an equivalent parameter change $\Delta p_{Vth}$ at the voltage $V_2$. In particular:

$$ t^+ = \Delta p_{Vth}^{-1} \Leftrightarrow \Delta p_{Vth}(V_2, t^+) = \Delta p_{Vth}(V_1, t_1) \qquad \sim 7 $$

As represented by the curve 702 in Figure 7, the final parameter shift $\Delta p_{Vth}$ is then for example computed considering the time $t_2$ spent at $V_2$, plus the time $t^+$. In other words:

$$ \Delta p_{Vth} = \Delta p_{Vth}(V_2, t_2 + t^+) \qquad \sim 8 $$

The same technique can be applied to a workload change by updating $\Delta p_{Vth}$ model parameters. Note that, even if $\Delta p_{Vth}$ has an exponential dependence on T, it has a linear behaviour within a limited temperature range, and therefore a similar technique is not necessary in the case of temperature changes, where simply a weighted average can be used instead.

In some embodiments, rather than using a determined parameter shift $\Delta p_{Vth}$ to indicate a current degradation, the models described herein can be used to calculate other results.

For example, with reference to Figure 1, the parameter variations $\Delta p_{Vth}$ of several portions of the digital circuit, for example of the various processing cores, can be calculated and compared, and based on this comparison, tasks can be assigned to the processing cores with the objective of maintaining relatively uniform aging, or favouring circuits that are aging more slowly.

As a further example, a mean time to failure (MTTF) is dynamically calculated by the processor 104 of Figure 1. This involves determining a future time at which a given delay, incorporating a safety margin, will be exceeded. For example, such a calculation is based on historical average values of the voltage, temperature and workload, and the inverse function of $\Delta p_{Vth}$ is used to find the MTTF.

First, a value $\Delta p'_{Vth}$ of $\Delta p_{Vth}$ is calculated for the given delay and based on average values of V and T, as follows:

$$\Delta p'_{Vth} \big| Delay\big(\hat{V}, \hat{T}, \Delta p'_{Vth}\big) = Delay_{Margin} \qquad \sim 9$$

Next, a similar operation is performed in order to find the time to reach this parameter change $\Delta p'_{Vth}$, as follows:

$$t_{MTTF} \big| \Delta p_{Vth}\big(\hat{V}, \hat{T}, t_{MTTF}\big) = \Delta p'_{Vth} \qquad \sim 10$$

The time $t_{MTTF}$ corresponds to the overall MTTF without taking into account the time $t_{spent}$ already spent, and thus the remaining time $t_{remain}$ is simply equal to $t_{MTTF}$ - $t_{spent}$. As an alternative, the equivalent time spent t' can be calculated by considering the current value of $\Delta p_{Vth}$, as follows:

$$t' \big| \Delta p_{Vth}\big(\hat{V}, \hat{T}, t'\big) = \Delta p_{Vth\_current} \qquad \sim 11$$

the time remaining $t_{remain}$ then being equal to $t_{MTTF}$ - t'.

According to another embodiment, the models described herein can be used to calculate maximum operating conditions in order to achieve a given lifetime t at a given propagation delay incorporating a safety margin, as will now be described with reference to Figure 8.

Figure 8 is a graph illustrating an example of a pareto frontier representing maximum levels of temperature T and voltage V in order to remain in a safe zone (SAFE ZONE). If there is more than one $\Delta p_{Vth}$ model corresponding to different workloads, an average of the coefficients of each model is for example taken, or a worst case workload can be assumed. In one embodiment, either the voltage or the temperature is fixed, and then the other can be calculated from the model. Alternatively, only the time t is defined in the model, such that relation between the voltage and temperature for the given delay margin defines the pareto frontier.

Figure 9 is a flow diagram representing yet an alternative embodiment in which the $\Delta p_{Vth}$ model is used to reduce the energy consumption by lowering the safety margin applied to the circuit to avoid timing faults. It may be implemented by an adaptive frequency scaling (AFS) system in which the delay is periodically estimated while a variable clock generator provides a clock signal at the maximum safe clock frequency $f_{MAX}$. It may alternatively be implemented in an adaptive voltage scaling (AVS) system, where the adaptation is done through the supply voltage while the clock frequency remains constant. Similarly, in the case that the digital circuit is based on FDSOI technology, the adaptation may be done through the body voltage. In some embodiments, the method is implemented as a closed loop, and the loop may be executed periodically, or whenever there is a significant change in the supply voltage and/or temperature.

In an operation 901, measurements of the supply voltage and temperature of the circuit are for example taken.

In an operation 902, the parameter variation $\Delta p_{Vth}$ is for example calculated based on the updated supply voltage and temperature.

In an operation 903, the propagation delay is for example estimated based on the parameter variation $\Delta p_{Vth}$, using the delay model.

In an operation 904, a frequency shift $\Delta f$ is computed to avoid timing faults in the case the propagation delay has increased, or to reduce the energy consumption in the case it has decreased. The same may be done in an AVS system by computing a supply voltage shift $\Delta V$, or in an adaptive body bias system by computing a body voltage shift $\Delta V_{bb}$.

In an operation 905, a new clock frequency $f_{MAX}$, a new supply voltage V or a new body voltage $V_{bb}$ is applied based respectively on the frequency shift $\Delta f$, supply voltage shift $\Delta V$ or body voltage shift $\Delta V_{bb}$ computed in operation 904. The method then for example returns to operation 901 after a determined time interval and/or in case of a significant change in the voltage or temperature.

An advantage of the embodiments described herein is that the impact of aging on the performance of a digital circuit can be calculated in a simple manner during the lifetime of the digital circuit. Furthermore, the method described herein for deriving the model of the parameter variation $\Delta p_{Vth}$ has the advantage of providing a model that relatively accurately reflects the aging of a critical path of the digital circuit.

Having thus described at least one illustrative embodiment, various alterations, modifications and improvements will readily occur to those skilled in the art. For example, it will be apparent to those skilled in the art that, while several applications of the $\Delta p_{Vth}$ model have been described, other applications will readily occur to those skilled in the art.

**Claims**

1. A method of determining the effect of aging on a propagation delay in a circuit path of a digital circuit (102), the method comprising:

   taking one or more measurements of at least one operating parameter of the digital circuit;
   determining, by a processing device (104) of the digital circuit, based on the one or more operating parameter measurements and based on a parameter aging model ($\Delta p_{Vth}$) stored in a memory (306) of the digital circuit representing a variation of a first parameter (p) as a function of the age of the digital circuit and as a function of the at least one operating parameter, a variation of the first parameter due to aging at a time t after fabrication of the digital circuit, wherein the first parameter (p) is a parameter of a delay model (DELAY MODEL) representing the propagation delay in the circuit path; and
   based on the determined variation of the first parameter (p), performing an action on the digital circuit (102).

2. The method of claim 1, wherein the at least one operating parameter is one or more of:

   - a supply voltage of the digital circuit;
   - a transistor body bias voltage of the digital circuit; and
   - a temperature of the digital circuit; and wherein:
   the parameter aging model ($\Delta p_{Vth}$) represents a variation of the first parameter (p) as a function of the supply voltage, body bias voltage and/or temperature of the digital circuit.

3. The method of claim 1 or 2, wherein said action comprises controlling, by said processing device based on said determined variation of the first parameter, one or more of:

   a supply voltage of all or part of the digital circuit;
   a clock frequency of all or part of the digital circuit;
   a transistor body voltage of all or part of the digital circuit; and
   a task assignment among a plurality of sub-circuits of said digital circuit.

4. The method of any of claims 1 to 3, wherein the parameter aging model ($\Delta p_{Vth}$) is based on the following equation:

$$\Delta p_{Vth}(V, T, t) = V^{\gamma} * e^{\frac{-E_a}{kT}} * (c_1 * t^{n_1} + c_2 * t^{n_2})$$

   where V is the supply voltage of the digital circuit, T is the temperature of the digital circuit, $\gamma$ is a voltage acceleration factor, $E_a$ is a temperature activation energy, k is Boltzmann's constant, and $c_1$, $c_2$, $n_1$ and $n_2$ are coefficients.

5. The method of any of claims 1 to 4, further comprising calculating the propagation delay in the circuit path using the delay model based on the determined variation of the first parameter.

6. The method of claim 5, wherein the delay model is based on the following equation:

$$Delay(V, T, t) = p_{\beta} + p_{\mu^{-1}}(T) \frac{V}{\left( V - \left( p_{Vth}(T) + \Delta p_{Vth}(V, T, t) \right) \right)^{p_{\alpha}}}$$

   where:

$$p_{\mu^{-1}}(T) = C_{\mu^{-1}} + k_{\mu^{-1}} T^{n_{\mu^{-1}}}, and \ p_{Vth}(T) = C_{Vth} - k_{Vth} T^{n_{Vth}}$$

   and where $C_{\mu}$-1, $k_{\mu}$-1, $n_{\mu}$-1, $C_{Vth}$, $k_{Vth}$, $n_{Vth}$, $p_{\alpha}$ and $p_{\beta}$ are coefficients of the delay model, $p_{Vth}(T) + \Delta p_{Vth}(V,T,t)$ is the first parameter, and $\Delta p_{Vth}(V,T,t)$ is the variation of the first parameter as a function of the age of the digital circuit.

7. The method of claim 6, further comprising determining by the processing device that the supply voltage was at a first voltage for a period $t_1$ and at a second voltage $V_2$ for a period $t_2$, wherein determining the variation of the first parameter due to aging at the time t after fabrication of the digital circuit comprises:

> determining, by the processing device (104) based on the parameter aging model ($\Delta p_{Vth}$), a first variation of the first parameter based on the period $t_1$ and the supply voltage $V_1$;
> determining, by the processing device (104) based on the parameter aging model ($\Delta p_{Vth}$), an equivalent period $t^+$ after which the variation of the first parameter would have been equal to the first variation had the supply voltage been at $V_2$ for the period $t_1$; and
> determining, by the processing device (104) based on the parameter aging model ($\Delta p_{Vth}$), a second variation of the first parameter for the periods $t_1$ and $t_2$ assuming a time period equal to $t^+ + t_2$ and the supply voltage $V_2$.

8. The method of any of claims 1 to 7, further comprising determining a mean time to failure (MTTF) of the digital circuit (102) based on the determined variation of the first parameter (p).

9. The method of any of claims 1 to 8, further comprising determining a clock frequency ($f_{MAX}$), supply voltage (V) and/or body bias voltage to be applied to the digital circuit (102) based on the determined variation of the first parameter (p).

10. The method of any of claims 1 to 9, wherein the digital circuit (102) comprises a plurality of sub-circuits (C1 to CN), said circuit path being part of a first of said sub-circuits, the method further comprising:

> determining, by the processing device (104) based on a further parameter aging model ($\Delta p_{Vth}$) representing a variation of a further parameter (p) as a function of at least the age of the digital circuit, a further variation of the further parameter due to aging at a time t after fabrication of the digital circuit, wherein the further parameter (p) is a parameter of a further delay model (DELAY MODEL) representing the propagation delay in the further circuit path; and
> comparing the determined further variation with the determined variation and controlling task distribution among the plurality of sub-circuits as a function of said comparison.

11. The method of any of claims 1 to 10, further comprising, prior to determining said variation of the first parameter, selecting said parameter aging model ($\Delta p_{Vth}$) from a plurality of parameter aging models, the selection being based on a determined workload of the digital circuit.

12. A method of determining, by a further processing device (302), the parameter aging model ($\Delta p_{Vth}$) of claim 1, the method comprising:

> determining propagation delays of the circuit path using a circuit simulation based on a range of supply voltages V and a range of temperatures T of the digital circuit;
> determining one or more parameters of the delay model based on said determined propagation delays using a fitting algorithm;
> determining propagation delays of the circuit path using a further age-aware simulation based on said range of supply voltages V, said range of temperatures T, and on a range of ages t of the digital circuit;
> determining variations of said one or more parameters of the delay model for each supply voltage V and temperature T as a function of the age t; and
> determining one or more coefficients of said parameter aging model based on said determined variations.

13. A circuit comprising:

> a digital circuit (102);
> a memory (306) storing a parameter aging model ($\Delta p_{Vth}$); and
> a processing device (104) configured to determine the effect of aging on a propagation delay in a circuit path of the digital circuit (102) by:

> > taking one or more measurements of at least one operating parameter of the digital circuit; and
> > determining, based on the one or more operating parameter measurements and based on the parameter aging model ($\Delta p_{Vth}$) representing a variation of a first parameter (p) as a function of the age of the digital circuit and as a function of the at least one operating parameter, a variation of the first parameter due to aging at a time t after fabrication of the digital circuit, wherein the first parameter (p) is a parameter of a delay model (DELAY MODEL) representing the propagation delay in the circuit path, wherein the processing device (104) is further configured to perform an action on the digital circuit (102) based on the determined variation of the first parameter (p).

14. The circuit of claim 13, wherein said parameter aging model ($\Delta p_{Vth}$) represents a variation of the first parameter (p) as a function of the supply voltage and temperature of the digital circuit, the circuit further comprising a supply voltage and temperature monitoring circuit (106) adapted to take said measurements of the supply voltage and temperature of the digital circuit.

15. The circuit of claim 13 or 14, further comprising a workload determination circuit (110) indicating a current workload of the digital circuit (102).

Fig 1

Fig 2

Fig 3

Fig 4

Fig 6A

Fig 6B

x $10^{-10}$

PROPAGATION
DELAY (s)

SUPPLY VOLTAGE (V)

TEMPERATURE (°C)

**Fig 5**

T

SAFE
ZONE

V

**Fig 8**

$\Delta p_{Vth}$

$V_1$          $V_2 > V_1$

702

704

t+

$t_1$          $t_2$          t

**Fig 7**

| 901 | 902 | 903 | 904 | 905 |
|-----|-----|-----|-----|-----|
| Measure Voltage and Temperature | Update $\Delta p_{Vth}$ | Estimate Delay | Compute $\Delta f / \Delta V / \Delta V_{bb}$ | Apply new frequency / supply voltage / body voltage |

**Fig 9**

Europäisches
Patentamt

European
Patent Office

Office européen
des brevets

# EUROPEAN SEARCH REPORT

**Application Number**

EP 18 16 4758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/253868 A1 (BANSAL ADITYA [US] ET AL) 26 September 2013 (2013-09-26) * paragraphs [0027] - [0065]; claims 1-11; figures 1-5 * | 1-15 | INV. G01R31/28 G01R31/317 G06F17/50 |
| A | US 2012/123745 A1 (SHEU BING JAY [TW] ET AL) 17 May 2012 (2012-05-17) * paragraphs [0013] - [0033]; claims 1-20; figures 1-4 * | 1-15 | |
| A | US 8 522 183 B1 (MCGUINNESS PATRICK J [US]) 27 August 2013 (2013-08-27) * column 2, line 49 - column 10, line 30; claims 1-19; figures 1-4 * | 1-15 | |
| A | US 8 977 998 B1 (AZIZI NAVID [CA] ET AL) 10 March 2015 (2015-03-10) * column 3, line 3 - column 10, line 37; claims 1-21; figures 1-9 * | 1-15 | |
| A | US 2012/126870 A1 (GRAAS CAROLE D [US] ET AL) 24 May 2012 (2012-05-24) * the whole document * | 1-15 | TECHNICAL FIELDS SEARCHED (IPC) G01R G06F |

The present search report has been drawn up for all claims

| Place of search | Date of completion of the search | Examiner |
|---|---|---|
| Munich | 20 August 2018 | Bilzer, Claus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 16 4758

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2018

| Patent document cited in search report | | Publication date | Patent family member(s) | | Publication date |
|---|---|---|---|---|---|
| US 2013253868 | A1 | 26-09-2013 | US | 2013253868 A1 | 26-09-2013 |
| | | | US | 2013254731 A1 | 26-09-2013 |
| | | | US | 2015154331 A1 | 04-06-2015 |
| US 2012123745 | A1 | 17-05-2012 | NONE | | |
| US 8522183 | B1 | 27-08-2013 | NONE | | |
| US 8977998 | B1 | 10-03-2015 | NONE | | |
| US 2012126870 | A1 | 24-05-2012 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B.P. DAS et al.** Within-Die Gate Delay Variability Measurement Using Reconfigurable Ring Oscillator. *IEEE Transactions on Semiconductor Manufacturing,* May 2009, vol. 22 (2), 256-267

- **V. B. KLEEBERGER et al.** A compact model for NBTI degradation and recovery under use-profile variations and its application to aging analysis of digital integrated circuits. *Microelectronics Reliability,* June 2014, vol. 54 (6-7), 1083-1089